# EUROPÄISCHE PATENTSCHRIFT

(11) **EP 2 246 110 B1**
(45) Veröffentlichungstag und Bekanntmachung des Hinweises auf die Patenterteilung: **29.05.2013**
(21) Anmeldenummer: 09015625.8
(22) Anmeldetag: 17.12.2009
(51) Int. Cl.: B01J 20/20, B01J 20/32, A62B 23/00

(54) **Sorptionsmittel umfassend eine mit einer Zink- und einer Molybdän-Verbindung imprägnierte Aktivkohle und gasfiltrierendes Element enthaltend das Sorptionsmittel**
Absorption agent comprising an active carbon impregnated with a zinc or molybdenum compound and gas-filtering element containing the absorption agent
Sorbant comprenant un charbon actif imprégné d'une liaison de zinc et de molybdène et élément filtrant le gaz contenant le sorbant

(30) Priorität: 02.05.2009 DE 102009019737
(43) Veröffentlichungstag der Anmeldung: 03.11.2010
(73) Patentinhaber: Dräger Safety AG & Co. KGaA, 23560 Lübeck (DE)
(72) Erfinder: Brandenburg, Benjamin, 23552 Lübeck (DE); Ammann, Klaus, 23611 Sereetz (DE); Wiese, Björn, 23617 Stockelsdorf (DE)
(74) Vertreter: Müller Schupfner & Partner

(56) Entgegenhaltungen:
- WO-A1-94/00383
- DE-T2- 69 229 507
- US-A- 3 355 317
- US-A- 5 714 126

## Beschreibung

Die Erfindung betrifft ein Sorptionsmittel umfassend eine imprägnierte Aktivkohle zur Sorption von Luftschadstoffen, wobei die Imprägnierung aufweist eine Zink-Verbindung und eine Molybdän-Verbindung, und ein gasfiltrierendes Element, wie z.B. einen Atemschutzfilter, enthaltend obiges Sorptionsmittel.

Mehrbereichsfilter in Atemschutzfiltern oder in gasfiltrierenden Elementen bieten den Anwendern einen umfangreichen Schutz gegen eine große Vielfalt an Schadgasen. Eine solche umfassende Schutzwirkung eines Gasfilters stellt hohe Ansprüche an die chemische Leistung der dabei verwendeten Aktivkohlen. Damit derartige Aktivkohlen eine größtmögliche Vielfalt an chemisch unterschiedlich reaktiven Schadgasen binden können, müssen diese Aktivkohlen chemisch imprägniert werden.

Zur Imprägnierung von Aktivkohlen zur Verwendung in Gasfiltern sind eine Vielzahl von anorganischen und organischen Verbindungen bekannt, wie beispielsweise basisches Kupfer- und Zinkcarbonat, Kupfer- und Zinksulfat, Natriumdichromat, Natriummolybdat, Natriumvanadat, Ammoniumchlorid, Ammoniumcarbonat, Silbernitrat sowie TEDA oder Weinsäure und deren Salze. Seit geraumer Zeit wird bei der Imprägnierung von Aktivkohlen zur Verwendung in Gasfiltern regelmäßig auf das von der Fachwelt häufig als carcinogen eingestufte Chromat verzichtet. Die erforderliche chemische Wirkung wird stattdessen von u.a. Molybdaten und Vanadaten sichergestellt.

Ebenso sind kupferhaltige Aktivkohlen bekannt: Ein wesentlicher Nachteil der kupferhaltigen Aktivkohlen ist die Möglichkeit des Entstehens von Dicyan bei HCN Beaufschlagung nach Lagerung des Filters. Dicyan hat vergleichbare toxische Eigenschaften wie HCN kann aber vom Menschen nicht wahrgenommen werden. In einer HCN-kontaminierten Umgebung würde der Anwender folglich einen Durchbruch seines Atemfilters nicht erkennen können und sogar Gefahr laufen, sich unbemerkt mit Dicyan zu vergiften. Damit der Anwender eines Atemfilters in HCN-kontaminierter Umgebung den Durchbruch seines, ggf. auch über längere Zeit bereits gelagerten, Filters wahrnehmen kann, darf die im Filter enthaltene Aktivkohle zu keiner Zeit Dicyan bilden.

Dicyan entsteht aus HCN in Gegenwart von Kupferverbindungen in basischem Milieu, genauer, durch Cu(II)-Salze, welche unter Reduktion zu Cu(I) reagieren (Schema 1).

### Schema 1

Bildung von Dicyan durch Cu²⁺

Cu²⁺ + 2 HCN -> Cu^{II}(CN)₂ + 2H⁺

Cu^{II}(CN)₂ -> Cu^{I}(CN)2 + ½ (CN)₂

Die Anwesenheit einer ausreichenden Menge an geeignetem Oxidationsmittel, beispielsweise Chromaten, Molybdaten oder Vanadaten auf der kupferhaltigen Aktivkohle kann die Freisetzung von Dicyan verhindern.

Sollte sich, aufgrund von z.B. Alterungseinflüssen, das Verhältnis von Kupfer zum Oxidationsmittel erniedrigen, steigt damit die Gefahr der Dicyan Freisetzung (Tabelle 1). Es ist nun gefunden worden, dass die Bildung von Dicyan durch Verzicht auf Cu(II)-Verbindungen vermieden werden kann.

Neben den bekannten chromatfreien, aber z.B. molybdathaltigen Aktivkohlen, existieren auf dem Gebiet der Mehrbereichsfilter auch imprägnierte Aktivkohlen, die gänzlich auf Oxoanionen der V- und VI-Gruppe verzichten. Imprägnierungen, die weder Oxoanionen der V- und VI-Gruppe noch Kupfersalze enthalten, sind ebenfalls bekannt. In beiden Fällen werden die Aktivkohlen mit geringen Mengen sehr teurer Silbersalze imprägniert und enthalten bisweilen noch größere Mengen an Zinksalzen. Die für die Imprägnierung eingesetzten Silbersalze reagieren jedoch überwiegend auf der Aktivkohle zu elementarem Silber, welches formal keine oxidierende Wirkung besitzt. Da weder Kupfersalze noch Oxidationsmittel auf einer solchen Aktivkohle vorliegen, zeigen solche Aktivkohlen eine deutlich schlechtere SO₂- und H₂S-Leistung. Durch die Erhöhung des Wasseranteils auf der Aktivkohle lässt sich diese Eigenschaft zwar teilweise kompensieren, jedoch wird durch diese Maßnahme gleichzeitig die Abscheideleistung für organische unpolare Schadgase gesenkt. Weiterhin ist die Lagerung von Filtern mit einer stark gefeuchteten Aktivkohle deutlich kritischer zu bewerten. Eine Austrocknung der Aktivkohle hat gravierende Leistungseinbußen, z.B. bei der SO₂- oder der NH₃-Abscheidung, zur Folge.

Aus der DE 69229507 T (= WO 93/10896 A1) sind verschiedene Kombinationen von Zink-, Kupfer- und Molybdat-Verbindungen als Sorptionsmittel auf Aktivkohle bekannt. Die DE 69229507 T sieht aber die Anwesenheit von Sulfationen zur Adsorption als zwingend notwendig an.

Aufgabe der vorliegenden Erfindung war es demnach, ein Sorptionsmittel für die Gasfiltration zur Verfügung zu stellen, das kein Chrom und/oder Kupfer enthält, die Gefahr der Dicyan Freisetzung minimiert bzw. ausschaltet und trotzdem möglichst vielseitig in der Sorption unterschiedlicher Schadgase ist. Darüber hinaus sollen entsprechend ausgerüstete Gasfilter auch nach längerer Lagerung noch zuverlässig einsetzbar sein.

Die Aufgabe wird überraschend gelöst durch den Gegenstand des Anspruchs 1.

Bevorzugte Ausführungsformen sind Gegenstand der abhängigen Ansprüche oder nachfolgend beschrieben.

Zinkverbindungen vermögen, im basischen Milieu HCN dauerhaft und ohne die Bildung des giftigen Dicyans zu binden. Dabei sind sie nicht auf die Gegenwart von Oxoanionen angewiesen (Schema 2). Damit sind kupferfreie zinkhaltige Imprägnierungen auch nach längerer Lagerung (Simulation der künstlichen Alterung bei höheren Temperaturen) noch in der Lage, einen ausreichend hohen Schutz gegen HCN zu bieten.

### Schema 2 Irreversible Bindung von HCN an Zn²⁺ im basischen Milieu

Zn²⁺ + 2 HCN → Zn^{II}(CN)₂ + 2H⁺

**Tabelle 1**

| Imprägnierung | Haltezelt HCN (Soll laut. Norm EN 14387) 25 min | |
|---|---|---|
| | nicht gealtert | nach künstlicher Alterung |
| Cu/Zn/Cr * ca. 7 Gew.-% | 36 min 100% HCN | 19 min 100% (CN)₂ |
| Cu/Zn/Mo * ca. 7 Gew.-% | 36 min 100% HCN | 28 min 100% (CN)₂ |
| Zn/Ag * ca. 12 Gew.-% | 45 min 100% HCN | 28 min 100 % HCN |
| Zn/Mo ca. 7 Gew.-% | 45 min 100% HCN | 35 min 100 % HCN |

| | | |
|---|---|---|
| * nicht erfindungsgemäß | | |

Damit die kupferfreien zinkhaltigen Imprägnierungen auch im weniger feuchten Zustand einen ausreichend hohen Schutz gegen SO₂ und H₂S bieten können, ist es gegenüber silberhaltigen Imprägnierungen deutlich effektiver mit Oxoanionen, wie Molybdat, auf Aktivkohle zu imprägnieren.

**Tabelle 2**

| Imprägnierung und Wasseranteil | Haltezeit lt. Norm EN 14387 | |
|---|---|---|
| | 20 min SO₂ | 40 min H₂S |
| Cu/Zn/Cr H₂O * ca. 7 Gew.-% | 26 min | 147 min |
| Cu/Zn/Mo H₂O * ca. 7 Gew.-% | 25 min | 127 min |
| Zn/Ag H₂O * ca. 12 Gew.-% | 21 min | 43 min |
| Zn/Mo H₂O ca. 7 Gew.-% | 25 min | 70 min |

| | | |
|---|---|---|
| * nicht erfindungsgemäß | | |

Im Folgenden wird beispielhaft eine erfindungsgemäße Rezeptur zur Herstellung einer zink- und molybdathaltigen Imprägnierung sowie die chemische Leistung einer so imprägnierten Aktivkohle gegenüber gängigen Schadgasen vorgestellt.

### Beispiel:

740 g Zinkcarbonat, 320 g Ammoniumchlorid, 290 g Ammoniumcarbonat und 250 g Natriummolybdat werden gelöst. Anschließend werden 4,5 kg Aktivkohle mit dieser Imprägnierlösung getränkt und die so erhaltene rieselfähige imprägnierte Aktivkohle sorgsam in einem Trockner erwärmt und getrocknet (Herstellung vgl. Schema 3).

### Schema 3:

Herstellung und Validierung der imprägnierten Aktivkohlen
1. Ansetzen der Imprägnierlösung
2. Aktivkohle abwiegen
3. Imprägnieren der Aktivkohle
4. Trocknung der Aktivkohle
5. Filterfertigung
8. Prüfung der Filter

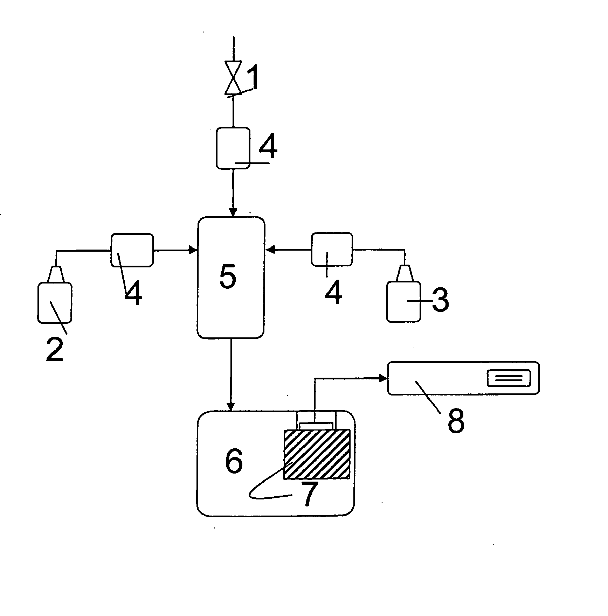

In Fig. 1 ist ein möglicher Aufbau zur Verprüfung der Filter auf HCN und SO₂ beispielhaft dargestellt. Über eine Prüfluftzufuhr 1 wird durch eine Dosiereinheit 4 Prüfluft gesteuert in ein Mischgefäß 5 geleitet, das mit SO₂ aus einer Schwefelsäurequelle 3 oder HCN aus einer KCN-Lösung 2 ebenfalls jeweils über eine Dosiereinheit 4 beaufschlagt werden kann. Der Filter 7 ist in einem Prüfbehälter 6 untergebracht. Die Halteleistung des Filters 5 kann durch das Messgerät 8 aufgenommen werden.

Die exemplarische Haltezeit einer erfindungsgemäßen imprägnierten Aktivkohle Zn/Mo mit ca. 7 Gew.-% H₂O gegen 5000 ppm Schadgas in einem Klasse 2 Filter nach EN 14387 ist in Tabelle 3 dargestellt.

**Tabelle 3:**

| 5000 ppm Schadgas | Haltezeit | Haltezeit laut Norm EN 14387 |
|---|---|---|
| C₆H₁₂ | 47 min | 35 min |
| HCN | 45 min | 25 min |
| Cl₂ | 30 min | 20 min |
| SO₂ | 25 min | 20 min |
| H₂S | 70 min | 40 min |
| NH₃ | 43 min | 40 min |

Die vorliegende Erfindung bietet eine technisch sinnvolle Lösung für das bekannte Problem der Dicyan-Bildung von chromatfreien und kupferhaltigen Aktivkohlen, nach der auf Cu(II)-Verbindungen in der Imprägnierung für die Aktivkohle verzichtet werden kann. Durch den Verzicht auf Kupfer-Verbindungen wird die Lagerstabilität der imprägnierten Aktivkohle deutlich verbessert. Ein ausreichend hoher Schutz gegen SO₂ und H₂S wird durch Verwendung von Oxoanionen des Molybdäns auf der Aktivkohle geboten, auch bei geringerem Wassergehalt des Sorptionsmittels.

## Patentansprüche

1. Sorptionsmittel umfassend Aktivkohle und eine Imprägnierung der Aktivkohle zur Sorption von Luftschadstoffen bzw. gasförmigen Schadstoffen, **dadurch gekennzeichnet, dass** die Imprägnierung aufweist
- 0,5 bis 15 Gew.-% zumindest eine Zink-Verbindung und
- 0,5 bis 15 Gew.-% zumindest eine Molybdän-Verbindung, wobei die Molybdän-Verbindung ein Molybdat ist,
jeweils bezogen auf das Trockengewicht der imprägnierten Aktivkohle und
wobei das Sorptionsmittel
• kein Chrom und keine Chrom-Verbindung, und
• kein Kupfer und keine Kupfer-Verbindung
enthält,
wobei das Sorptionsmittel erhältlich ist durch Tränken von Aktivkohle mit einer Lösung von Zinkcarbonat Ammoniumchlorid, Ammoniumcarbonat und Natriummolybdat und Trocknen der so erhaltenen rieselfähigen imprägnierten Aktivkohle unter Erwärmen.

2. Sorptionsmittel nach zumindest einem der vorhergehenden Ansprüche, **dadurch gekennzeichnet, dass** das Sorptionsmittel kein Silber und keine Silberverbindungen enthält.

3. Gasfiltrierendes Element enthaltend das Sorptionsmittel nach zumindest einem der vorhergehenden Ansprüche, insbesondere Atemschutzfilter.

## Claims

1. A sorbent, comprising charcoal and an impregnation of the charcoal for sorption of air pollutants and/or gaseous pollutants, **characterized in that** the impregnation comprises
- 0.5 to 15% by weight of at least one zinc compound; and
- 0.5 to 15% by weight of at least one molybdenum compound, wherein the molybdenum compound is a molybdate,
each relative to the dry weight of the impregnated charcoal; and
wherein the sorbent contains
- no chromium and no chromium compound; and
- no copper and no copper compound;
wherein the sorbent is obtainable by impregnating charcoal with a solution of zinc carbonate, ammonium chloride, ammonium carbonate and sodium molybdate and drying by heating the so obtained free-flowing, impregnated charcoal.

2. The sorbent according to at least one of the preceding claims, **characterized in that** the sorbent contains no silver and no silver compounds.

3. A gas-filtering element, comprising the sorbent according to at least one of the preceding claims, in particular a respiratory filter.

## Revendications

1. Sorbant comprenant un charbon actif et une imprégnation du charbon actif pour la sorption de substances nocives aériennes ou gazeuses, **caractérisé en ce que** l'imprégnation comprend
- 0,5 à 15 % en poids d'au moins un composé de zinc et
- 0,5 à 15 % en poids d'au moins un composé de molybdène, le composé de molybdène étant un molybdate,
à chaque fois par rapport au poids sec du charbon actif imprégné et dans lequel le sorbant
• ne comprend pas de chrome ni de composé de chrome, et
• ne comprend pas de cuivre ni de composé de cuivre,
le sorbant pouvant être obtenu par imprégnation du charbon actif avec une solution de carbonate de zinc, de chlorure d'ammonium, de carbonate d'ammonium et de molybdate de sodium et séchage du charbon actif imprégné et écoulable ainsi obtenu sous chauffage.

2. Sorbant selon au moins l'une des revendications précédentes, **caractérisé en ce que** le sorbant ne comprend pas d'argent ni de composés d'argent.

3. Elément filtrant le gaz contenant le sorbant selon au moins l'une des revendications précédentes, en particulier filtre de protection respiratoire.
